# EUROPÄISCHE PATENTSCHRIFT

(11) **EP 1 165 271 B1**
(45) Veröffentlichungstag und Bekanntmachung des Hinweises auf die Patenterteilung: **16.10.2002**
(21) Anmeldenummer: 00907591.2
(22) Anmeldetag: 21.02.2000
(51) Int. Cl.: B21J 9/02, B23P 15/24, B21K 1/76

(54) **VERFAHREN ZUM HERSTELLEN EINES TAUMELSTEMPELS**
METHOD OF PRODUCING A WOBBLE DIE
PROCEDE POUR PRODUIRE UN POINCON

(30) Priorität: 08.04.1999 DE 19915758
(43) Veröffentlichungstag der Anmeldung: 02.01.2002
(73) Patentinhaber: Hirschvogel Umformtechnik, 86920 Denklingen (DE)
(72) Erfinder: DAHME, Michael, D-86916 Kaufering (DE)
(74) Vertreter: Rupp, Christian, Dipl.-Phys.
(86) Internationale Anmeldenummer: EP0001400
(87) Internationale Veröffentlichungsnummer: WO00061318

(56) Entgegenhaltungen:
- DE-C- 19 637 839
- PATENT ABSTRACTS OF JAPAN vol. 1995, no. 02, 31. März 1995 (1995-03-31) & JP 06 320345 A (CITIZEN WATCH CO LTD), 22. November 1994 (1994-11-22)
- PATENT ABSTRACTS OF JAPAN vol. 1995, no. 01, 28. Februar 1995 (1995-02-28) & JP 06 285576 A (CITIZEN WATCH CO LTD), 11. Oktober 1994 (1994-10-11)
- PATENT ABSTRACTS OF JAPAN vol. 011, no. 034 (M-558), 31. Januar 1987 (1987-01-31) & JP 61 202740 A (SUMITOMO METAL IND LTD), 8. September 1986 (1986-09-08)

## Beschreibung

Die vorliegende Erfindung betrifft ein Verfahren zum Herstellen eines Taumelstempels nach dem Oberbegriff des Anspruches 1 (Siehe z.B. JP-A- 06 320 345).

Taumelstempel finden beim Umformen oder Nachbearbeiten von Werkstücken Verwendung, insbesondere bei solchen Werkstücken, die eine nichtrotationssymmetrische Geometrie und/oder Hinterschneidungen aufweisen. In der deutschen Patentschrift DE 196 37 839 ist beispielsweise die Bearbeitung der Kugellaufbahnen und Käfigführungsflächen eines Außenteiles eines Rzeppa-Gleichlaufgelenkes durch einen Taumelstempel beschrieben. Bei dem dort beschriebenen Verfahren wird zuerst ein segmentweise unterschiedlich konvex gekrümmter Taumelstempel in den Hohlraum eines Vorwerkstückes eingetaucht. Aufgrund der unterschiedlichen Krümmungen der Segmente weist der Taumelstempel an seiner Oberfläche rippenförmige Konturen auf, die zur Bearbeitung der Kugellaufbahnen verwendet werden. Anschließend wird dann der Taumelstempel in eine Taumelbewegung versetzt, wobei er in mehreren kreisförmigen Umläufen über die zu verformenden Flächen des Vorwerkstückes abgewälzt wird.

Bei dem in der DE 197 44 639 beschriebenen Verfahren wird die Außenwandung eines Werkstückes bearbeitet. Es handelt sich dabei um ein Schaltzahnrad mit koaxial angeordneten und axial vorstehenden Schaltzähnen, die einen axialen Hinterschnitt haben. Auch hier werden der Taumelstempel und das Vorwerkstück relativ zueinander in eine taumelnde Kreisbewegung versetzt, so daß sich die Konturen des Taumelstempels pressend und materialumformend über die Außenseite des Vorwerkstückes bewegen.

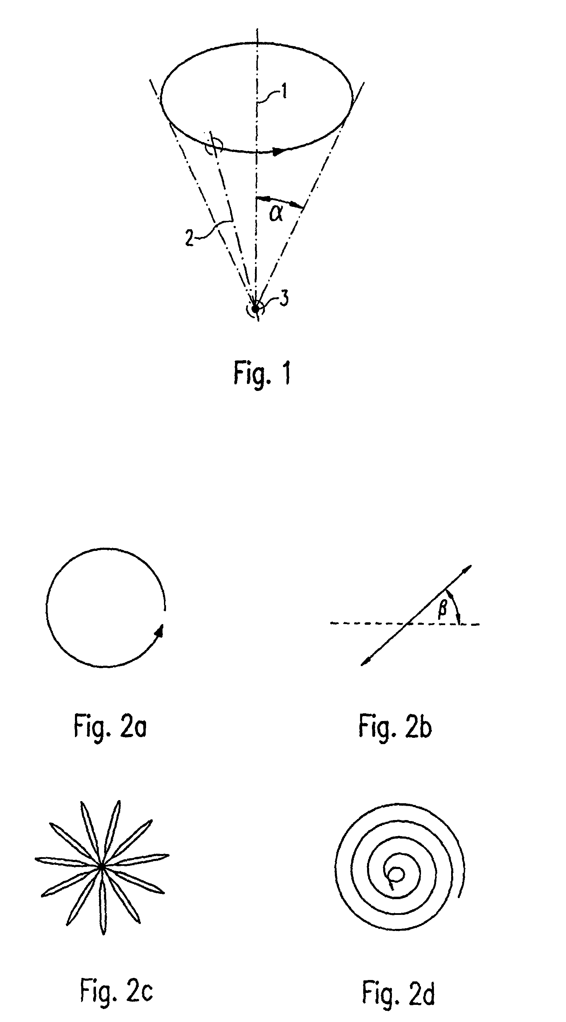

Für die Taumelbewegung sind verschiedene Bewegungsarten denkbar, die im folgenden anhand der Fig. 1 und 2 kurz erläutert werden sollen. Während des Aufsetzens oder Entfernens des Taumelstempels sind das Vorwerkstück und der Taumelstempel gemeinsam entlang einer Hauptachse 1 orientiert. Während der Bewegung wird die Taumelachse 2 - falls nur der Taumelstempel allein in Bewegung versetzt wird, enstpricht diese der Mittelachse des Stempels - gegenüber der Zentralachse um den Taumelwinkel α ausgelenkt. Die Taumelachse 2 führt immer durch den Taumelpunkt 3; das heißt, dieser Taumelpunkt 3 ist das neutrale Zentrum der Taumelbewegung. Die unterschiedlichen Bewegungsarten werden durch einen Punkt auf der Taumelachse 2 dargestellt, der sich mit dieser bewegt. Vier verschiedene Bewegungsarten sind in Fig. 2a-2d dargestellt. Die kreisförmige Bewegung (Fig. 2a) eignet sich beispielweise zur Bearbeitung ringförmiger Hinterschneidungen. Bei der linearen Bewegung (Fig. 2b) wird eine Pendelbewegung ausgeführt, wobei der Winkel β, der eine vorgegebene Ebene der Taumelpresse und die Pendelebene einschließt, auf einen beliebigen Wert eingestellt werden kann. Eine Bearbeitung des Werkstücks in regelmäßigen Abständen wird durch die schleifenförmige Bewegung der Fig. 2c erreicht. Fig. 2d zeigt schließlich eine spiralförmige Taumelbewegung, bei der der Anpreßdruck des Stempels fortwährend reduziert oder erhöht werden kann.

Zur Erzeugung derartiger Taumelbewegungen sind mehrere Arten von Taumelpressen geeignet, die nach ihren Werkzeugbewegungen in mehrere Typen klassifiziert werden:

Bei der Taumelpresse vom Typ 1 führt ein Unterwerkzeug mit dem darin eingelegten Werkstück eine angetriebene Rotationsbewegung um die Maschienenachse aus. Der Taumelpreßstempel dreht sich synchron zur Rotationsbewegung des Unterwerkzeugs um die um den Taumelwinkel α geneigte Taumelachse mit. Eine Translationsbewegung, die einer Hubbewegung während des Umformvorganges entspricht, wird ebenfalls durch den Taumelpreßstempel hydraulisch eingeleitet. Diese Translationsbewegung wird ausgeführt, um den Taumelpreßstempel 4 zu jedem Zeitpunkt auf einer geeigneten Höhe gegenüber dem Werkstück 1 zu halten. Ist die Rotationsbewegung des Taumelpreßstempels nicht angetrieben, d.h. dreht sich dieser frei um die Taumelachse mit dem Werkstück mit, so spricht man von der Taumelpresse Typ 1A. Wird hingegen die Rotationsbewegung des Taumelpreßstempels zusätzlich angetrieben, so wird diese Taumelpresse Typ 1B genannt.

Die Taumelpresse vom Typ 2 besitzt ein festes Unterwerkzeug, das weder Translationsnoch Rotationsbewegungen ausführen kann. Das Werkstück ist während des gesamten Bearbeitungsvorganges stationär. Der Taumelpreßstempel führt dafür insgesamt drei Bewegungen aus, ein Rotation um die Taumelachse, eine Taumelbewegung um die Maschienenachse, sowie die hydraulisch angetriebene Hubbewegung in axialer Richtung.

Typ 3 Taumelpressen stellen dagegen die gängigste Art von Taumelpressen dar. Hier erfolgt die hydraulisch angetriebene Hubbewegung durch einen Zylinder im unteren Teil der Maschine. Die axiale Translationsbewegung wird also durch das Außenwerkzeug ausgeführt. Die Taumelbewegung wird durch den Taumelpreßstempel eingeleitet, Unterwerkzeug und Werkstück bleiben hinsichtlich der Rotationsbewegung stationär.

Allgemein ist zu bemerken, daß der Taumelpunkt mathematisch gesehen auch unendlich weit entfernt liegen kann, was zu einer walzenden Bewegung führt. Diese Walzbewegung stellt somit einen Extremfalll einer Taumelbewegung dar.

Die Form des Taumelstempels richtet sich zum einen nach der gewünschten Kontur des Vorwerkstückes. Dabei muß gewährleistet sein, daß der Taumelstempel vor und nach dem Taumelprozeß ohne Probleme aufgesetzt bzw. wieder entfernt werden kann. Für die Bearbeitung des glockenförmigen Außenteils eines Rzeppa-Gleichlaufgelenks bedeutet dies beispielsweise, daß der maximale Querschnitt des Taumelstempels nicht größer sein darf als die Öffnung. Dieses Problem ergibt sich allgemein immer dann, wenn mit dem Taumelstempel Hinterschneidungen bearbeitet werden sollen. Außerdem muß bei der Gestaltung des Taumelstempels die Taumelbewegung berücksichtigt werden, wobei nicht jede Taumelbewegung zum Bearbeiten einer gewünschten Struktur geeignet ist. Beispielsweise richtet sich der Taumelwinkel α auch nach der Tiefe der umzuformenden Kugellaufbahnen. Weiterhin können während des Taumelverfahrens elastische Verformungen an Werkstück und Werkzeug auftreten, so daß das tatsächlich erzielte Ergebnis von dem theoretische berechneten abweicht.

Es ist daher Aufgabe der vorliegenden Erfindung, ein möglichst einfaches Verfahren zur Herstellung eines Taumelstempels anzugeben, mit dem an einem Werkstück durch eine Taumelbewegung die gewünschten Umformungen erzielt werden können.

Diese Aufgabe wird durch ein Verfahren, welches die Merkmale des Anspruches 1 aufweist, gelöst. Dieses Verfahren zeichnet sich dadurch aus, daß ein Stempel, dessen Form der Negativ-Form des fertigen Werkstückes entspricht, unter Berücksichtigung der Parameter der Taumelbewegung zu einem Taumelstempel deformiert wird.

Weiterbildungen des Verfahrens sind Gegenstand der Unteransprüche. So kann das Verfahren insbesondere zu einem iterativen Verfahren erweitert werden, bei dem unter Berücksichtigung von Abweichungen zwischen dem gewünschten und dem tatsächlich erreichten Werkstück die Form des Taumelstempels schrittweise so verändert wird, daß diese Abweichungen geringer werden. Einzelne Schritte des Verfahrens können dabei rechnerunterstützt erfolgen.

Im folgenden soll das erfindungsgemäße Verfahren anhand der beiliegenden Zeichnung näher erläutert werden. Dabei zeigen:
Fig. 1 ein Schema zur Definition der Parameter einer Taumelbewegung;
Fig. 2a-2d vier unterschiedliche Taumelbewegungsarten;
Fig. 3 das Flußdiagramm eines erfindungsgemäßen Verfahrens;
Fig. 4a ein zu erzeugendes Werkstück;
Fig. 4b das zu erzeugende Werkstück in Aufsicht;
Fig. 5a einen virtuellen Stempel im Schnitt und in Aufsicht (verkleinert);
Fig. 5b Punktewolke des virtuellen Stempels
Fig. 6 eine Darstellung des Verfahrensschritts des Deformierens des Stempels;
Fig. 7 den fertigen Taumelstempel;
Fig. 8 das Flußdiagramm eines iterativen Verfahrens zur schrittweisen Optimierung des Taumelstempels;
Fig. 9 eine Darstellung des Korrekturschritts des iterativen Verfahrens.

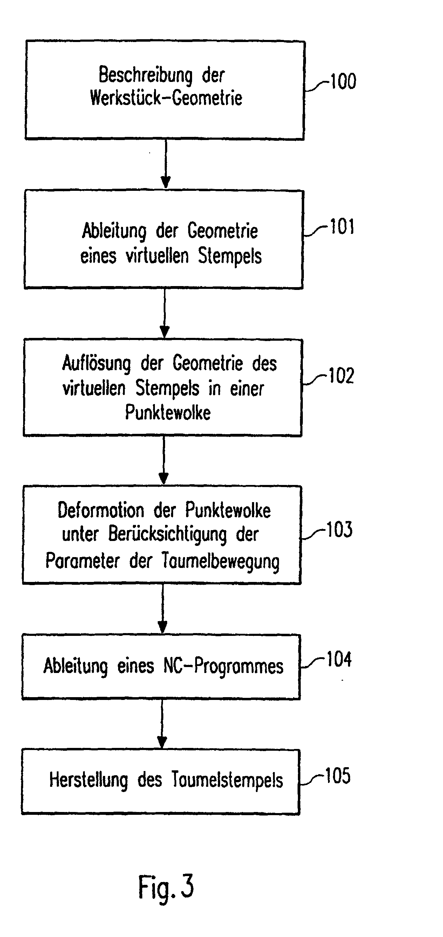

Ein erstes Ausführungsbeispiel eines Verfahrens zum Herstellen eines Taumelstempels sei zunächst anhand der Fig. 3 bis 7 erläutert. Die sechs Schritte dieses Verfahrens sind in dem Flußdiagramm in Fig. 3 dargestellt.

Im ersten Schritt 100 des Verfahrens erfolgt die exakte Beschreibung der dreidimensionalen Geometrie des zu erzeugenden Werkstückes. Dies erfolgt in einfachster Weise mit Hilfe eines CAD-Programmes. Im zweiten Schritt 101 erfolgt die Ableitung eines sog. virtuellen Stempels, daß heißt eines Stempels, dessen Form im wesentlichen der Negativ-Form des zu erzeugenden Werkstückes entspricht. Auch die Beschreibung dieses virtuellen Stempels erfolgt vorzugsweise mit Hilfe des CAD-Programms. Die Geometrie dieses virtuellen Stempels wird im darauffolgenden Schritt 102 durch eine Punktewolke beschrieben. Das bedeutet, daß die Oberfläche des virtuellen Stempels durch die dreidimensionalen Koordinaten einer endlichen Anzahl von Oberflächenpunkten dargestellt wird. Der wesentliche Verfahrensschritt ist der folgende Schritt 103. Hier wird die Punktewolke unter Berücksichtigung der Parameter der Taumelbewegung, also unter Berücksichtigung des Taumelwinkels, der Lage des Taumelpunktes und der Bewegungsart so deformiert daß sie nun die Struktur des gewünschten Taumelstempels beschreibt. Dies ist gleichbedeutend einer Rück-Transformation der Koordinaten der Oberflächenpunkte entsprechend ihrer Auslenkung während des Taumelns. Anschließend wird mit Hilfe dieser Punktewolke in Schritt 104 ein NC-Programm abgeleitet und im Schritt 105 der Taumelstempel angefertigt.

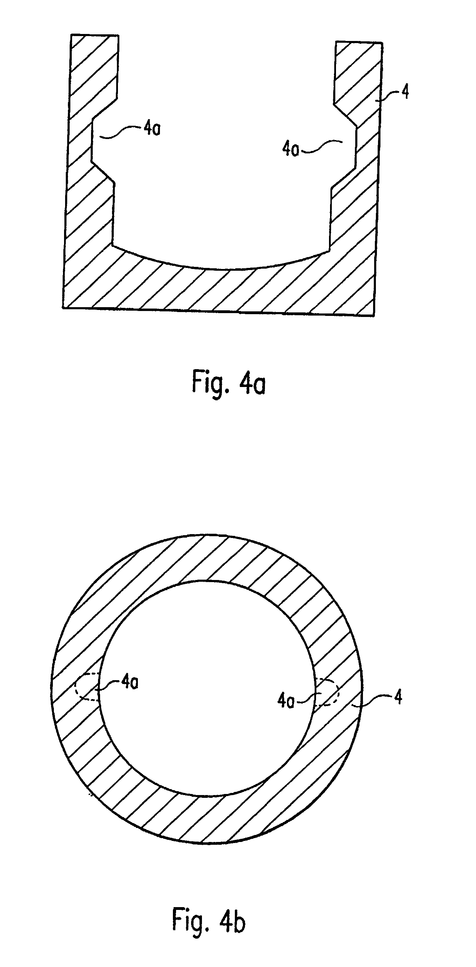

Ein Werkstück, das mit einem nach diesem Verfahren hergestellten Taumelstempel bearbeitet werden soll, ist in den Fig. 4a und 4b gezeigt. Das zylinderförmige Werkstück 4 besitzt eine ebenfalls zylinderförmige Bohrung, die zwei Hinterschneidungen 4a aufweist. Fig. 4b zeigt das Werkstück in Aufsicht. Die Verwendung eines normalen Preßstempels zur Bearbeitung ist in diesem Fall nicht möglich, da die beiden gegenüberliegenden Hinterschneidungen 4a nicht durchgängig bis zur Öffnung des Werkstücks 4 sind und der Preßstempel anschließend nicht mehr aus dem Werkstück 4 entfernt werden könnte. Die Bearbeitung mit dem Taumelstempels soll hier in erster Linie zur Nachbarbeitung oder Umformung der beiden Hinterschneidungen 4a erfolgen. In diesem Fall bietet sich zur Bearbeitung die in Fig. 2b dargestellte geradlinige Taumelbewegung an, daß heißt der Taumelstempel wird während der Bearbeitung um einen Taumelpunkt pendeln.

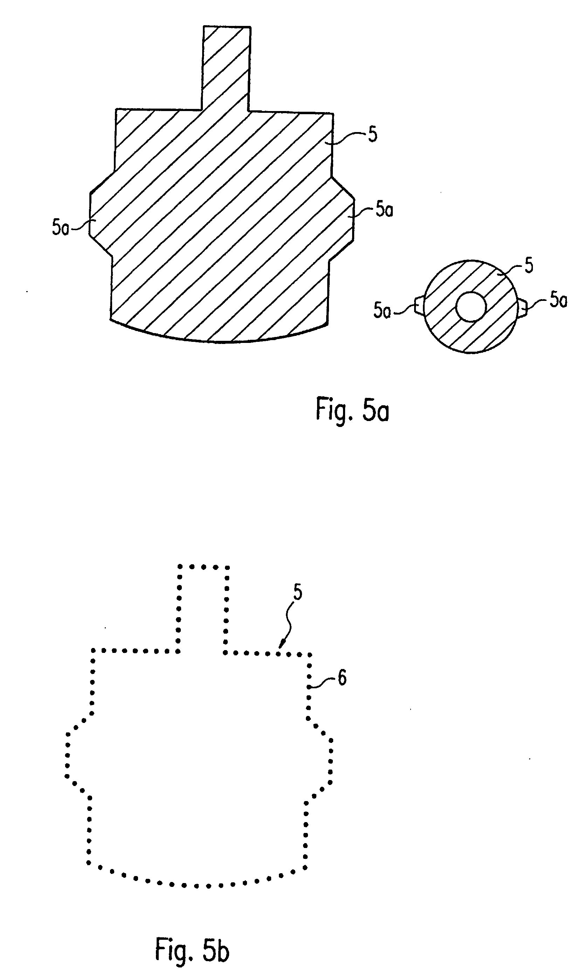

In den ersten beiden Schritten (100, 101) des Verfahrens gemäß Fig. 3 erfolgt die Beschreibung der dreidimensionalen Geometrie des Werkstückes 4 und des virtuellen Stempels 5, der nach den obigen Ausführungen den Hohlraum des Werkstückes 4 und die Hinterschneidungen 4a vollständig ausfüllt. Diesen virtuellen Stempel, dessen Außenkontur der Innenkontur des Werkstückes 4 entspricht, zeigt Fig. 5a. Entsprechend den beiden Ausnehmungen 4b des Werkstückes, weist er zwei gegenüberliegende Vorwölbungen 5a auf.

Der Verfahrensschritt 102, also die Auflösung der Geometrie des virtuellen Stempels 5 in einer Punktewolke 6, ist in Fig. 5b gezeigt. Die Beschreibung der Struktur des virtuellen Stempels 5 erfolgt nun durch die dreidimensionalen Koordinaten einer endlichen Menge von Oberflächenpunkten. Die Anzahl der verwendeten Oberflächenpunkte und dementsprechend der mittlere Abstand zwischen den einzelnen Punkten bestimmt die Genauigkeit der Beschreibung der Geometrie des virtuellen und später des fertigen Taumelstempels. Im dreidimensionalen Bereich entspricht diese Punktewolke 6 einem Netz von Oberflächenpunkten.

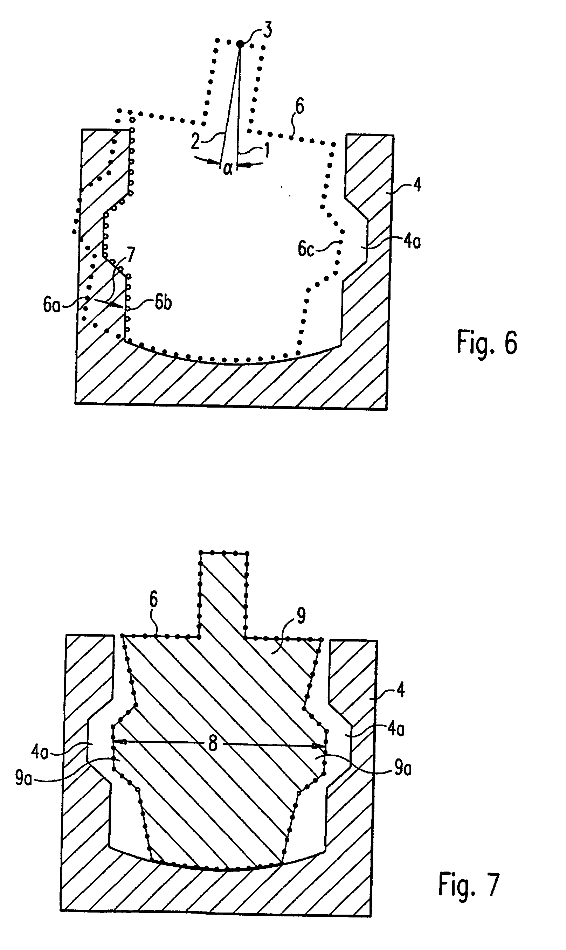

Der entscheidende Schritt 103 des Verfahrens, nämlich die Deformation der Punktewolke 6 ist in Fig. 6 dargestellt. Bei der gewählten geradlinigen Taumelbewegung wird der Taumelstempel um den Taumelpunkt 3 pendeln und dabei gegenüber der Zentralachse 1 um den Taumelwinkel α ausgelenkt werden. Diese Auslenkung um den Winkel α entspricht einer Verschiebung des Oberflächenpunktes 6a. Die Deformation der Punktewolke 6 erfolgt nun durch eine Rücktransformation der Oberflächenpunkte, beispielsweise ein Rücktransformation des Punktes 6a um den Vektor 7 zu dem neuen Oberflächenpunkt 6b. Dabei werden allerdings nur diejenigen Oberflächenpunkte 6a transformiert, die zu einem Oberflächenbereich des Stempels gehören, der in diesem Augenblick gerade das Werkstück 4 bearbeiten, d.h. das Werkstück 4 berührt. Das bedeutet, daß in dem konkret dargestellten Beispiel in Fig. 6 die Punktewolke 6 nur auf ihrer linken Seite deformiert wird, während die Koordinaten der Oberflächenpunkte 6c auf der rechten Seite zunächst unverändert bleiben.

Im Verlauf des Schritts 103 werden dann auch die Oberflächenpunkte 6c auf der rechten Seite deformiert, so daß man schließlich eine wie in Fig. 7 dargestellte Punktewolke 6 erhält. Aufgrund der Deformation weist diese nun eine im wesentlichen konische Form auf, wobei ihr maximaler Durchmesser 8 die Öffnungsweite der Bohrung des Werkstückes 4 nun nicht mehr überschreitet, so daß der fertige Taumelstempel 9 ohne Schwierigkeiten aus dem Werkstück 4 entfernt werden kann. Mit Hilfe der Koordinaten der deformierten Punktewolke 6 kann anschließend ein entsprechendes NC-Programm erstellt werden, um den Taumelstempel 9 beispielsweise durch ein spanabhebendes Verfahren oder durch Erodieren herzustellen.

Dieses Verfahren kann auf wesentlich komplexere Werkstückformen erweitert werden, wobei der Aufwand für die Durchführung des Schrittes 103, also für das Deformieren der Punktewolke stark von der Geometrie des Werkstückes und der gewählten Taumelbewegung abhängt. Insbesondere muß auch berücksichtig werden, daß nicht jede Taumelbewegung zur Bearbeitung eines bestimmten Werkstückes geeignet ist. Bei dem Beispiel der Fig. 3-7 muß beispielsweise eine so starke Auslenkung mit einem Taumelwinkel α gewählt werden, daß die Punktewolke so komprimiert wird, daß ihr maximaler Durchmesser 8 einen Grenzwert nicht überschreitet.

Ist eine geeignete Taumelbewegung gewählt, erlaubt das vorgeschlagene Verfahren eine sehr einfache Herstellung eines Taumelstempels, da sich die Auslenkungen der Oberflächenpunkte während der Taumelbewegung einfach berechnen lassen. Dabei ist das vorgeschlagene Verfahren nicht auf die Herstellung von Taumelstempeln zur Bearbeitung von Hohlräumen beschränkt. Beispielsweise kann damit auch der in der DE 197 44 639 beschriebene Taumelstempel zur Herstellung des Schaltzahnrades oder andere Taumelstempel, die Außenkonturen bearbeiten, hergestellt werden. Es muß allerdings eine solche Taumelbewegung vorliegen, bei der sichergestellt ist, daß ein bestimmter Punkt des Werkstückes immer durch einen gleichen Punkt des Taumelstempels bearbeitet wird. Dementsprechend bieten sich die in Fig. 2 dargestellten Taumelbewegungen b und c an. Der Winkel β der Taumelbewegung b kann natürlich fortwährend verändert werden, was einer sternförmigen Auslenkung des Taumelstempels entspricht, wie dies in Fig. 2c gezeigt ist.

Ein Vorteil dieses Verfahrens ist darin zu sehen, daß ausgehend von der gewünschten Geometrie des fertigen Werkstückes mit Hilfe einfacher geometrischer Berechnungen die Struktur des Taumelstempels gefunden werden kann, wodurch auch in einfacher Weise Korrekturen möglich sind.

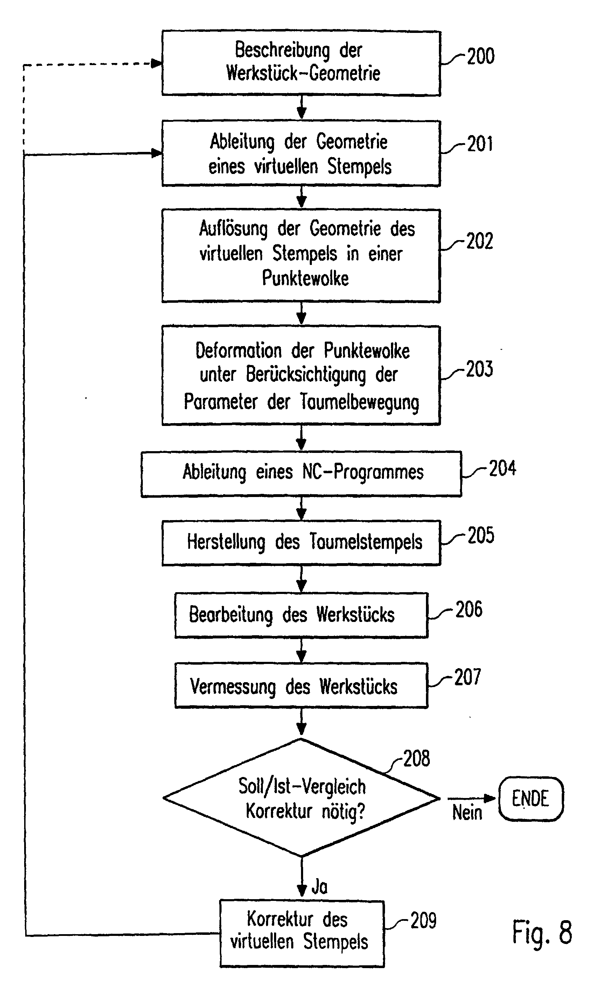

Dies wird bei einem erweiterten Verfahren, dessen Ablaufschema in Fig. 8 dargestellt ist, ausgenützt. Da während der Taumelbewegung sowohl der Taumelstempel als auch das Werkstück einem großen Druck ausgesetzt sind, können währenddessen elastische Verformungen auftreten. Deshalb muß ein theoretisch berechneter Taumelstempel nicht zwingend zur gewünschten Werkzeugform führen. Das in Fig. 3 vorgeschlagene Verfahren kann daher in einfacher Weise zu einem iterativen Verfahren erweitert werden, bei dem die Form des Taumelstempels Schritt für Schritt optimiert wird, bis die Form des damit bearbeiteten Werkstücks schließlich den Anforderungen entspricht.

Die Schritte 200 bis 205 des iterativen Verfahrens entsprechen den Schritten 100 bis 105 des in Fig. 3 dargestellten Verfahrens. Ausgehend von der gewünschten Geometrie des Werkstückes wird somit auch hier zuerst ein virtueller Stempel unter Berücksichtigung der Parameter der Taumelbewegung zu einem Taumelstempel verformt. In Schritt 206 wird dann mit dem auf diese Weise hergestellten Taumelstempel ein Werkstück bearbeitet, das dann in Schritt 207 vermessen wird. In Schritt 208 wird schließlich ein Soll/Ist-Vergleich durchgeführt, in dem entschieden wird, ob die Qualität des Werkstückes zufriedenstellend ist oder ob Abweichungen von der gewünschten Werkstückgeometrie vorgegebene Toleranzgrenzen überschreiten. Ist dies der Fall, werden an den entsprechenden Stellen des virtuellen Stempels Korrekturen (Schritt 200 oder Schritt 201) durchgeführt und es wird mit dem Verfahrensschritt 202, also mit der Beschreibung der Geometrie des nun veränderten virtuellen Stempels durch eine Punktewolke fortgefahren.

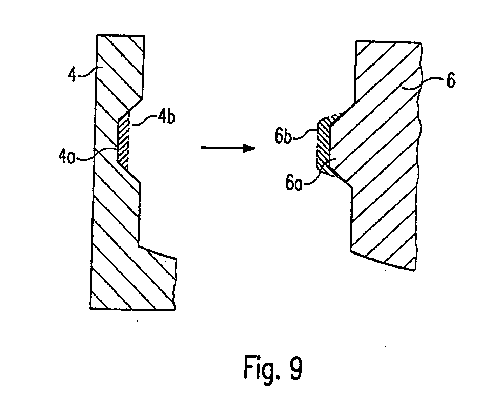

Die Vorgehensweise während des Verfahrensschritts 209 ist in Fig. 9 dargestellt. Beispielsweise kann es beim Austaumeln des aus den Fig. 4 bis 7 bekannten Werkstückes 4 zu einer elastischen Verformung der Vorwölbung 9a des Taumelstempels 9 kommen, so daß die tatsächlich erzeugte Tiefe 4b der Ausnehmung nicht mit der gewünschten Tiefe 4a übereinstimmt. Dementsprechend wird in dem Schritt 209 die Vorwölbung 6a des Taumelstempels 6 erweitert, so daß sich die neue Vorwölbung 6b ergibt. Mit dem auf diese Weise korrigierten virtuellen Taumelstempel 6 wird nun das Verfahren in Schritt 202 fortgesetzt. Das neu bearbeitete Werkstück wird nun eine Ausnehmung aufweisen, die eher der gewünschten Geometrie entspricht. Sollte das Ergebnis nach wie vor nicht zufriedenstellend sein, wird die Schleife der Verfahrensschritte 200 bzw. 201 bis 209 solange durchlaufen, bis die Abweichungen schließlich vorgegebene Fehlertoleranzen unterschreiten. Dabei wird im Verfahrensschritt 209 jeweils der zuletzt verwendete virtuelle Taumelstempel korrigiert.

Auf diese Weise kann innerhalb weniger Schleifendurchläufe und mit geringem zusätzlichen Aufwand ein Taumelstempel hergestellt werden, der zur Bearbeitung der gewünschten Werkstückgeometrie geeignet ist. Der besondere Vorteil dieses erweiterten Verfahrens ist darin zu sehen, daß ein geeigneter Taumelstempel ohne Kenntnis der Verzerrungsgesetze, die sich aus der Kinematik des Taumelprozesses ergeben, erreicht werden kann. Elastische Deformationen des Werkzeugs und des Werkstückes können somit in einfacher Weise ausgeglichen werden.

## Patentansprüche

1. Verfahren zur Herstellung eines Taumelstempels (9) zum Umformen der Innenkontur oder der Außenkontur eines Werkstückes (4) in einem Taumelverfahren, wobei das Herstellungsverfahren die folgenden Schritte aufweist:
a) Festlegung einer Taumelbewegung;
b) Beschreibung der dreidimensionalen Geometrie des umgeformten Werkstückes (4);
c) Einbeschreibung der dreidimensionalen Geometrie eines virtuellen Stempels (5), dessen Form im wesentlichen der Negativform der Geometrie des umgeformten Werkstückes (4) entspricht;
**gekennzeichnet durch** folgende Schritte :
d) Verformung der Geometrie des virtuellen Stempels (5) unter Berücksichtigung der Parameter der festgelegten Taumelbewegung zu einer den Taumelstempel (9) beschreibenden Geometrie; und
e) Fertigung eines Taumelstempels (9) auf Basis der in Schritt d erhaltenen Geometrie.

2. Verfahren nach Anspruch 1,
**dadurch gekennzeichnet,**
**daß** die Beschreibung der Geometrie des Werkstückes (4) und des virtuellen Stempels (5) mit Hilfe eines CAD-Programms erfolgt.

3. Verfahren nach Anspruch 1 oder 2,
**dadurch gekennzeichnet,**
**daß** die Fertigung des Taumelstempels (9) mit Hilfe eines nach der in Schritt d erhaltenen Geometrie abgeleiteten NC-Programms erfolgt.

4. Verfahren nach einem der Ansprüche 1 bis 3,
**dadurch gekennzeichnet,**
**daß** der Taumelstempel (9) durch ein spanabhebendes Verfahren oder durch Erodieren gefertigt wird.

5. Verfahren nach einem der Ansprüche 1 bis 4,
**dadurch gekennzeichnet,**
**daß** zum Verformen der Geometrie des virtuellen Stempels (5), dessen Struktur durch eine endliche Anzahl von Oberflächenpunkten (Punktewolke, 6) beschrieben wird und deren Koordinaten unter Berücksichtigung der Auslenkung während der Taumelbewegung transformiert werden.

6. Verfahren nach einem der Ansprüche 1 bis 5,
**dadurch gekennzeichnet,**
**daß** das Verfahren zusätzlich die folgende Schritte aufweist:
f) Bearbeitung eines Vorwerkstückes (4) durch den Taumelstempel (9);
g) Vermessung des bearbeiteten Werkstückes (4) und Soll/Ist-Vergleich mit der gewünschten Werkstück-Geometrie;
h) Korrektur der Geometrie des zuletzt deformierten virtuellen Stempels (5) und Wiederaufnahme des Verfahrens in Schritt d, falls das Ergebnis des Soll/Ist-Vergleichs besagt, daß die Abweichungen zwischen dem bearbeiteten Werkstück (4) und der gewünschten Werkstück-Geometrie vorgegebene Toleranzgrenzen überschreiten;
wobei die Schritte d bis h so lange wiederholt durchgeführt werden, bis das Ergebnis des Soll/Ist-Vergleichs besagt, daß die Abweichungen zwischen dem bearbeiteten Werkstück (4) und der gewünschten Werkstück-Geometrie vorgegebene Toleranzgrenzen nicht überschreiten.

7. Verfahren nach einem der Ansprüche 1 bis 6,
**dadurch gekennzeichnet,**
**daß** eine Taumelbewegung gewählt wird, bei der das Werkstück (4) eine angetriebene Rotationsbewegung um die Maschienenachse (1) ausführt und der Taumelstempel (9) sich synchron zur Rotationsbewegung des Werkstücks (4) um die um einen Taumelwinkel α geneigte Taumelachse (2) mitdreht.

8. Verfahren nach Anspruch 7,
**dadurch gekennzeichnet,**
**daß** die Rotationsbewegung des Taumelstempels (9) zusätzlich angetrieben ist.

9. Verfahren nach Anspruch 7 oder 8,
**dadurch gekennzeichnet,**
**daß** für den Taumelwinkel α = 0° gilt.

10. Verfahren nach einem der Ansprüche 1 bis 6,
**dadurch gekennzeichnet,**
**daß** eine Taumelbewegung gewählt wird, bei der das Werkstück (4) stationär ist und der Taumelstempel (9) gleichzeitig ein Rotation um die Taumelachse (2), eine Taumelbewegung um die Maschienenachse (1) und eine Hubbewegung in axialer Richtung ausführt.

11. Verfahren nach einem der Ansprüche 1 bis 6,
**dadurch gekennzeichnet,**
**daß** eine Taumelbewegung gewählt wird, bei der das Werkstück (4) eine Hubbewegung in axialer Richtung und der Taumelstempel (9) gleichzeitig ein Rotation um die Taumelachse (2) und eine Taumelbewegung um die Maschienenachse (1) ausführt.

## Claims

1. Method of manufacturing a rocking die (9) for forming the inner contour or the outer contour of a workpiece (4) in a rocking process, the manufacturing method having the following steps:
a) definition of a rocking movement;
b) description of the three-dimensional geometry of the formed workpiece (4);
c) inscription of the three-dimensional geometry of a virtual die (5), the shape of which corresponds substantially to the negative shape of the geometry of the formed workpiece (4),
**characterized by** the following steps:
d) deformation of the geometry of the virtual die (5), taking into account the parameters of the defined rocking movement, to a geometry describing the rocking die (9); and
e) production of a rocking die (9) on the basis of the geometry obtained in step d.

2. Method according to Claim 1,
**characterized in that**
the description of the geometry of the workpiece (4) and of the virtual die (5) is effected with the aid of a CAD program.

3. Method according to Claim 1 or 2,
**characterized in that**
the production of the rocking die (9) is effected with the aid of an NC program derived in accordance with the geometry obtained in step d.

4. Method according to any one of Claims 1 to 3,
**characterized in that**
the rocking die (9) is produced by means of a cutting process or by means of erosion.

5. Method according to any one of Claims 1 to 4,
**characterized in that**
for deforming the geometry of the virtual die (5), the structure of which is described by means of a finite number of surface points (point cloud 6) and their coordinates, transformation is effected taking into account the deflection during the rocking movement.

6. Method according to any one of Claims 1 to 5,
**characterized in that**
the method additionally has the following steps:
f) working of a preliminary workpiece (4) by means of the rocking die (9);
g) measurement of the worked workpiece (4) and desired-value/actual-value comparison with the desired workpiece geometry;
h) correction of the geometry of the last deformed virtual die (5) and resumption of the method in step d if the result of the desired-value/actual-value comparison indicates that the deviations between the worked workpiece (4) and the desired workpiece geometry exceed predetermined tolerance limits;
the steps d to h being performed repeatedly until the result of the desired-value/actual-value comparison indicates that the deviations between the worked workpiece (4) and the desired workpiece geometry do not exceed predetermined tolerance limits.

7. Method according to any one of Claims 1 to 6,
**characterized in that**
a rocking movement is selected with which the workpiece (4) executes a driven rotational movement about the machine axis (1) and the rocking die (9) co-rotates in synchronism with the rotational movement of the workpiece (4), about the rocking axis (2) inclined by a rocking angle α.

8. Method according to Claim 7,
**characterized in that**
the rotational movement of the rocking die (9) is additionally driven.

9. Method according to Claim 7 or 8,
**characterized in that**
rocking angle α = 0° applies.

10. Method according to any one of Claims 1 to 6,
**characterized in that**
a rocking movement is selected with which the workpiece (4) is stationary and the rocking die (9) simultaneously executes a rotation about the rocking axis (2), a rocking movement about the machine axis (1) and a stroke movement in the axial direction.

11. Method according to any one of Claims 1 to 6,
**characterized in that**
a rocking movement is selected with which the workpiece (4) executes a stroke movement in the axial direction and the rocking die (9) simultaneously executes a rotation about the rocking axis (2) and a rocking movement about the machine axis (1).

## Revendications

1. Procédé de fabrication d'un poinçon à mouvement de nutation (9) pour façonner le contour intérieur ou le contour extérieur d'une pièce ouvrée (4) lors d'un procédé de nutation, le procédé de fabrication présentant les étapes suivantes :
a) Définition d'un mouvement de nutation ;
b) Description de la géométrie tridimensionnelle de la pièce ouvrée (4) façonnée ;
c) Inscription de la géométrie tridimensionnelle d'un poinçon virtuel (5), dont la forme correspond pour l'essentiel au négatif de la géométrie de la pièce ouvrée (4) façonnée ;
**caractérisé par** les étapes suivantes :
d) Déformation de la géométrie du poinçon virtuel (5), compte tenu des paramètres du mouvement de nutation défini, jusqu'à obtention d'une géométrie décrivant le poinçon à mouvement de nutation (9) ; et
e) Fabrication d'un poinçon à mouvement de nutation (9) sur la base de la géométrie obtenue à l'étape d.

2. Procédé selon la revendication 1, **caractérisé en ce que** la description de la géométrie de la pièce ouvrée (4) et du poinçon virtuel (5) s'effectuent au moyen d'un programme de CAO.

3. Procédé selon l'une des revendications 1 ou 2, **caractérisé en ce que** la fabrication du poinçon à mouvement de nutation (9) est effectuée à l'aide d'un programme de commande numérique (NC) déduit d'après la géométrie obtenue à l'étape d.

4. Procédé selon l'une des revendications 1 à 3, **caractérisé en ce que** le poinçon à mouvement de nutation (9) est fabriqué par usinage ou érosion.

5. Procédé selon l'une des revendications 1 à 4, **caractérisé en ce que**, pour la déformation de la géométrie du poinçon virtuel (5), sa structure est décrite par un nombre fini de points de sa surface (contour de points, 6), et **en ce que** leurs coordonnées sont transformées compte tenu de leur élongation pendant le mouvement de nutation.

6. Procédé selon l'une des revendications 1 à 5, **caractérisé en ce que** le procédé présente en plus les étapes suivantes :
f) Façonnage d'une ébauche de la pièce ouvrée (4) par le poinçon à mouvement de nutation (9) ;
g) Mesurage de la pièce ouvrée (4) façonnée et comparaison consigne / valeur réelle avec la géométrie désirée de la pièce ouvrée ;
h) Correction de la géométrie du poinçon virtuel (5) déformé en dernier et reprise du procédé à l'étape d si le résultat de la comparaison consigne / valeur réelle exprime que les écarts entre la pièce ouvrée (4) façonnée et la géométrie désirée de ladite pièce dépassent les limites de tolérance spécifiées.

7. Procédé selon l'une des revendications 1 à 6, **caractérisé en ce qu'**un mouvement de nutation est choisi, pour lequel la pièce ouvrée (4) décrit un mouvement de rotation entraîné autour de l'axe de la machine (1), et que le poinçon à mouvement de nutation (9) tourne en synchronisme avec le mouvement de rotation de la pièce ouvrée (4) autour de l'axe de nutation (2) incliné d'un angle de nutation α.

8. Procédé selon la revendication 7, **caractérisé en ce que** le mouvement de rotation du poinçon à mouvement de nutation (9) est entraîné en plus.

9. Procédé selon l'une des revendications 7 ou 8, **caractérisé en ce que**, pour l'angle de nutation, on a α = 0°.

10. Procédé selon l'une des revendications 1 à 6, **caractérisé en ce qu'**un mouvement de nutation est choisi, pour lequel la pièce ouvrée (4) est stationnaire et le poinçon à mouvement de nutation (9) exécute en même temps une rotation autour de l'axe de nutation (2), un mouvement de nutation autour de l'axe de la machine (1) et un mouvement linéaire dans la direction axiale.

11. Procédé selon l'une des revendications 1 à 6,
**caractérisé en ce qu'**un mouvement de nutation est choisi, pour lequel la pièce ouvrée (4) exécute un mouvement linéaire dans la direction axiale et le poinçon à mouvement de nutation (9) exécute en même temps une rotation autour de l'axe de nutation (2) et un mouvement de nutation autour de l'axe de la machine (1).
